(19) Europäisches Patentamt
European Patent Office
Office européen des brevets

(11) **EP 1 843 460 A1**

(12) **EUROPÄISCHE PATENTANMELDUNG**

(43) Veröffentlichungstag:
**10.10.2007 Patentblatt 2007/41**

(51) Int Cl.:
**H02P 6/00** *(2006.01)*     **H02P 6/24** *(2006.01)*

(21) Anmeldenummer: **07006910.9**

(22) Anmeldetag: **03.04.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **06.04.2006 DE 102006017429**

(71) Anmelder: **Saia-Burgess Dresden GmbH**
**01257 Dresden (DE)**

(72) Erfinder: **Ritschel, Sten, Dipl.-Ing.**
**01728 Bannewitz (DE)**

(74) Vertreter: **Grüneberg, Marcus**
**Voigt & Grüneberg**
**Patent- und Rechtsanwälte**
**Herr RA Marcus Grüneberg**
**Prager Strasse 34**
**04317 Leipzig (DE)**

(54) **Schaltungsanordnung zur Einstellung von Motorkennlinien**

(57)     Die Erfindung betrifft eine Schaltungsanordnung (1) zur Einstellung von Motorkennlinien, insbesondere zur Stabilisierung des Motorkipprnoments eines 2-phasigen Synchronmotors (2) unter Verwendung eines Vorschaltelements (14). Das Vorschaltelement (14) ist zwischen einem als Neutralleiter ausgebildeten ersten Netzleiter (12.1) und der gemeinsamen Phase (11) des Synchronmotors (2) geschaltet und ein als Leiter ausgebildeter zweiter Netzleiter (12.2) ist mit einer Phase des Synchronmotors (2) verbunden. Erfindungsgemäß wird als spannungsveränderbares Vorschaltelement (14) eine Transistor-Dioden-Kombination (3) eingesetzt, wobei zur Erzielung einer annähernd konstanten sinusförmigen Wechselspannungsamplitude und/oder Wechselstromamplitude durch den Synchronmotor (2) der für die maximale Spitzenspannung der pulsierenden Netzspannung ausgelegte und in seinem Arbeitspunkt analog steuerbar ausgebildete Transistor (4) ein nicht getakteter Bipolartransistor oder Feldeffekttransistor ist, und die Dioden (6) als Gleichrichterbrücke (5) formiert sind.

*FIG.5*

EP 1 843 460 A1

**Beschreibung**

Die Erfindung betrifft eine Schaltungsanordnung zur Einstellung von Motorkennlinien, insbesondere zur Stabilisierung des Motorkippmoments eines 2-phasigen Synchronmotors gemäß dem Oberbegriff des Anspruchs 1.

Synchronmotoren sind zuverlässige Stellantriebe für viele preissensitive Anwendungen in den Bereichen der Automobil- oder Bürokommunikation, der Medizintechnik, des Werkzeugbaus, der Konsumelektronik, der GebäudeAusrüstung oder der Messtechnik.

Im Bereich der Gebäudeausrüstung werden Synchronmotoren beispielsweise als Stellantrieb für Ventile zur Wärmeversorgung eingesetzt. Durch eine Kombination eines relativ kleinen Synchronmotors mit einem Getriebe können auf Grund der Getriebeuntersetzung sehr hohe Stellkräfte erzeugt werden.

Da Synchronmotoren direkt am Wechselspannungsnetz betrieben werden, kann meist auf eine Anpassung der Spannungsebene verzichtet werden. Bei 2-phasig ausgebildeten Synchronmotoren wird die zweite Phase durch einen Betriebskondensator $C_M$ aus der Netzphase gebildet. Weit verbreitet ist hierfür die Parallelschaltung, bei der eine gemeinsame Phase gebildet wird.

Der Betrieb von Synchronmotoren an unterschiedlichen Netzspannungen erfordert üblicherweise einen ohmschen $R_V$ oder kapazitiven $C_V$ Widerstand als Vorschaltelement.

Die Drehzahl des Synchronmotors wird durch seine Konstruktion, insbesondere durch die Polzahl 2p eines Ständers, und die Frequenz f des Speisenetzes bestimmt. Sie ist nicht vom Drehmoment abhängig.

Der Synchronmotor dreht mit synchroner Drehzahl und kann dabei vom Leerlauf bis zu einem maximalen Drehmoment belastet werden, ohne dass sich seine Drehzahl ändert. Dieses maximale Drehmoment wird als Kippmoment $M_K$ bezeichnet. Es stellt eine Stabilitätsgrenze des Synchronmotor dar; bei höherer Belastung läuft der Synchronmotor instabil und bleibt stehen. Nachteilig für die praktische Nutzung ist die Spannungsabhängigkeit des Kippmomentes $M_K$. Es besteht eine direkte Proportionalität $M_K = f(U)$ zwischen dem Kippmoment $M_K$ und der Versorgungsspannung U, so dass eine exakte Drehmomentbegrenzung des Synchronmotors wegen der Netzspannungstoleranzen sehr schwierig ist.

Anwendungen von Synchronmotoren die eine Drehmomentbegrenzung erforderlich machen, werden nach dem Stand der Technik aus einer Kombination von Synchronmotor/Synchrongetriebemotor und einem Federmechanismus gebildet, wobei der Federmechanismus bei einem definierten und unterhalb des Kippmomentes $M_K$ liegenden Motorlastmoment einen Mikrotaster betätigt, der den Synchronmotor abschaltet.

Eine weitere Alternative zur gezielten Abschaltung eines Synchronmotors beim Erreichen eines definierten Motorlastmoments besteht darin, eine Kupplung mit Permanentmagneten zur Kraftübertragung oder eine als Rutschkupplung ausgebildete Kupplung vorzusehen. Neben dem Vorteil dieser mechanischen Abschaltung, dass für das Abschalten bei Überlast während der Fahrt der gleiche Mechanismus benutzen werden kann wie für die Endabschaltung am Ende des Stellbereiches des Synchronmotors, sind auch nicht unerhebliche Nachteile zu verzeichnen, wie z. B. der Einsatz von zusätzlichen mechanischen Elementen, der mechanische Verschleiß, die geringere Lebensdauer, die Notwendigkeit eines oder mehrere Abschaltelemente vorzusehen oder die Justage bzw. Kontrolle der Abschaltcharakteristik in der Fertigung.

Des Weiteren ist aus der WO 02/095926 A1 bzw. DE 200 08 483 U1 eine Schaltungsanordnung zum Abschalten von Synchronmotoren vorbekannt. Hierbei wird bei Verwendung nur eines einzigen Wechselspannungsschaltelements eine preiswerte und zuverlässige Ausführung der Abschaltung beim Überschreiten des Motorkippmoments realisiert. Das zum Zeitpunkt des Blockierens auftretende maximale Drehmoment bleibt auch hierbei stark von der Netzspannung abhängig.

Zusammenfassend lässt sich festhalten, dass zum Zwecke der Drehmomentbegrenzung von Aktuatoren mittels einer Endabschaltung der Versorgungsspannung im Stand der Technik Thyristoren, Triacs, Phototriacs, Relais und Mikroschalter eingesetzt werden.

Ferner ist in der DE 19533076 A1 eine Steuerschaltung für Synchronmotoren beschrieben, bei der das asynchrone Starten des Motors mittels eines Triacs realisiert wird.

Häufig wird beim Einsatz von Thyristoren oder Triacs die Ansteuerschaltung mit dem Mittel einer Phasenanschnittssteuerung kombiniert. Dadurch kann effektiv die wirksame Wechselspannung gezielt reduziert bzw. geregelt werden. Ein typisches Anwendungsbeispiel ist ein Leuchtendimmer. Für den Einsatz zur Regelung des Kippmomentes $M_K$ von Synchronmotoren ist eine derartige Phasenanschnittssteuerung jedoch ungünstig, da die Oberwellen den Gleichlauf des Synchronmotors stören und damit zusätzliche Geräusche verursachen. Nur beim Beibehalten eines nahezu sinusförmigen Spannungsverlaufes können zusätzliche Geräuschemissionen ausgeschlossen und die ordnungsgemäße Funktion des dimensionierten Betriebskondensators eingehalten werden.

Die aus dem Stand der Technik vorbekannte Schaltungsanordnung gemäß der DE 3509451 A1 nutzt zur Lösung der Nachteile, wie z. B. dem starken Brummen der Motoren, einer Phasenanschniassteuerung einen schnellen Taktschalter. Mit Hilfe einer Pulsweitenmodulation (PWM) bzw. einer Frequenzmodulation (PFM) wird dieser Taktschalter gesteuert und somit der sinusförmige Stromverlauf beibehalten. Der als Transistor ausgebildete Taktschalter arbeitet stets als Schalter mit sehr kurzen Schaltzeiten, vorzugsweise mit Frequenzen über dem Hörbereich. Der gute Wirkungsgrad dieser Taktschaltung und die geringe thermische Belastung der Ansteuerung werden durch eine sehr komplexe und aufwendig zu dimensionierende Oberbrückungsschaltung, respektive Freilaufkreis, "erkauft". Diese Überbrückungsschaltung muss mit der Taktschaltung synchronisiert werden, damit keine Schaltspitzen auftreten und die Bauelemente zerstören. Für den Einsatz von Klauenpolmotoren mit Leistungen von wenigen Watt ist diese Lösung aus Kostengründen nicht geeignet. Im Vergleich zum allgemein anerkannten Stand der Technik stellt sich die Frage, ob der Einsatz eines klassischen Frequenzumrichters AC/DC-DC/AC nicht gleich teuer kommt und in der praktischen Umsetzung zusätzliche Vorteile bietet. Ein besonderer Nachteil dieser Lösung sind die leitungsgebundenen und gestrahlten Störemissionen, die durch die schnellen Schaltflanken des Taktschalters erzeugt werden. Erfahrungsgemäß machen derartige getaktete Leistungsschalter zusätzliche kostenrelevante Schutzmaßnahmen im Sinne der EMV notwendig.

Die Aufgabe der Erfindung besteht nunmehr darin, eine Schaltungsanordnung zur Einstellung von Motorkennlinien, insbesondere des Motorkippmoments eines 2-phasigen Synchronmotors vorzuschlagen, mit der sowohl eine Drehmomentbegrenzung als auch das Erkennen und Abschalten des Synchronmotors nach Überlast bzw. mit Erreichen der Endanschläge auch bei schwankender Versorgungsspannung möglich ist.

Nach der Konzeption der Erfindung weist die Schaltungsanordnung zur Einstellung von Motorkennlinien, insbesondere zur Stabilisierung des Motorkippmoments eines 2-phasigen Synchronmotors ein Vorschaltelement auf, wobei das Vorschaltelement zwischen einem als Neutralleiter ausgebildeten ersten Netzleiter und der gemeinsamen Phase des Synchronmotors geschaltet ist und ein als Leiter ausgebildeter zweiter Netzleiter mit einer Phase des Synchronmotors verbunden ist. Erfindungsgemäß wird als spannungsveränderbares Vorschaltelement eine Transistor-Dioden-Kombination eingesetzt, wobei zur Erzielung einer annährend konstanten sinusförmigen Wechselspannungsamplitude und/oder Wechselstromamplitude durch den Synchronmotor der für die maximale Spitzenspannung der pulsierenden Netzspannung ausgelegte und in seinem Arbeitspunkt analog steuerbar ausgebildete Transistor ein nicht getakteter Bipolartransistor oder Feldeffekttransistor ist, und die Dioden als Gleichrichterbrücke formiert sind.

Die vorliegende Er*findung vermeidet folglich die Nachteile von Freilaufkreis und EMV, indem die Leistungsreduzierung nicht mit dem Mittel einer Pulsweitenmodulation bzw. Frequenzmodulation eines Taktschalters gelöst wird.

Ursächlich für die erfindungsgemäße Schaltungsanordnung zur Einstellung von Motorkennlinien ist der langjährige Einsatz von mechanischen Überlastkupplungen für Schritt- und Synchronmotoren und der Entwicklungsgedanke zu nennen, dass der Motor selbst eine Art von elektromagnetischer Kupplung darstellt, dass heißt, bei Überlast Schritte verliert. Mit einem Vorwiderstand, der immer in Abhängigkeit von der momentanen Netzspannung oder des Motorstromes automatisch justiert wird, ist das Problem technisch lösbar.

Je nach Widerstandswert fällt ein unterschiedlich großer Anteil der Netzspannung über dem Vorschaltelement ab- Das als Transistor-Dioden-Kombination ausgebildete Vorschaltelement kann erfindungsgemäß so gesteuert werden, dass die Wechselspannungsamplitude über dem Synchronmotor stets konstant bleibt. Im Ergebnis dieser konstanten Spannung fließt bei konstanter Motortemperatur auch ein konstanter Motorstrom. Die auftretende Verlustleistung führt zur Erwärmung des Vorwiderstandes und begrenzt den praktischen Einsatz dieses Prinzips auf kleine Synchronmotoren mit einer Leistung von wenigen Watt.

Zum Schutz des Transistors vor einer naturgemäß alternierenden Versorgungsspannung des Synchronmotors werden mehrere als Gleichrichterbrücke formierte Dioden eingesetzt. Eine erforderliche Dimensionierung der Dioden erfolgt in Abhängigkeit der Höhe der Versorgungsspannung der Synchronmotoren. Typische VersorgungsSpannungen für Synchronmotoren sind 24VAC oder 230VAC, nach denen folglich die Dioden bemessen werden.

Beim Einsatz eines Transistors an Wechselspannung bzw. beim Einsatz in einer Gleichrichterbrücke mit pulsierender Gleichspannung ist zu beachten, dass sich die Spannung über dem Transistor ständig ändert, aber der differenzielle Widerstand nahezu konstant bleiben soll.

Zur Generierung der analogen internen Steuerspannung $U_{St}$ des Bipolartransistors wird eine mit dem Laststrom des Bipolartransistors oder mit dem Spannungsabfall über dem Synchronmotor beaufschlagbare interne Auswerte- und Steuereinheit verwendet. Hierbei sind die Auswerte- und Steuereinheit mit der Basis des Bipolartransistors, der Spannungspunkt U+ der Gleichrichterbrücke mit dem Kollektor des Bipolartransistors und der Spannungspunkt U- der Gleichrichterbrücke mit dem Emitter des Bipolartransistors sowie der Auswerte- und Steuereinheit Signal leitend gekoppelt.

Hingegen wird bei der Verwendung eines Feldeffekttransistors (FET) zur Generierung der internen Steuerspannung $U_{St}$ des FET nur eine mit dem Laststrom des FET beaufschlagbare interne Auswerte- und Steuereinheit eingesetzt. Hierbei sind der Spannungspunkt U+ der Gleichrichterbrücke mit dem Drain des FET, die Auswerte- und Steuereinheit mit der Source des FET und dem Spannungspunkt U- der Gleichrichterbrücke sowie das Gate des FET mit dem Spannungspunkt U- der Gleichrichterbrücke gekoppelt.

Erfindungsgemäß wird als FET ein selbstleitender SFET eingesetzt, der durch den Spannungsabfall an einem Stromfühlerwiderstand zwischen der Source und dem Spannungspunkt U- gesteuert wird.

Bei einer vorteilhaften Weiterbildung der Erfindung ist die interne Auswerte- und Steuereinheit zum Zwecke der Spannungsmessung und -überwachung mit den Motorspulen und dem Transistor gekoppelt. Eine Kernidee der Erfindung besteht darin, die Spannungsmessung und -überwachung und/oder zusätzlich eine Phasenwinkelmessung an den Motorspulen zur elektronischen Endlagenerkennung des Synchronmotors einzusetzen und mit dem vorgestellten Vorschaltelement zu kombinieren.

Bei einer weiteren Ausgestaltung der Erfindung ist die Auswerteeinheit von der Steuereinheit lokal getrennt platziert. Die als Mikrokontroller ausgebildete externe Steuereinheit generiert hierbei eine Steuerspannung für den Transistor. Neben der internen Auswerte- und Steuereinheit ist auch die externe Steuereinheit zum Zwecke der Spannungsmessung und -überwachung mit den Motorspulen und dem Transistor gekoppelt.

Die Anordnungen von interner Auswerteeinheit und externer Steuereinheit erfordern eine Potentialtrennung. In der Praxis wird hierzu beispielsweise ein Optokoppler eingesetzt.

Zur Abschaltung des Synchronmotors beim Erreichen seiner Endlagen wird der Transistor komplett gesperrt und dabei die gemeinsamen Phase des Synchronmotors unterbrochen. Damit wird der Transistor erfindungsgemäß analog gesteuert um das Motorkippmoment $M_K$ im normalen Fahrbetrieb konstant zu halten, im Falle einer Überlast kann der Transistor jedoch zusätzlich als Netzschalter arbeiten.

Die Ziele und Vorteile dieser Erfindung sind nach sorgfältigem Studium der nachfolgenden ausführlichen Beschreibung der hier bevorzugten, nicht einschränkenden Beispielausgestaltungen der Erfindung mit den zugehörigen Zeichnungen besser zu verstehen und zu bewerten, von denen zeigen:

Fig. 1:     aus dem Stand der Technik vorbekannte Schaltungsanordnung zur Steuerung eines Synchronmotors mit einem Betriebskondensator $C_M$.

Fig. 2:     aus dem Stand der Technik vorbekannte Schaltungsanordnung zur Steuerung eines Synchronmotors mit einem spannungsunveränderlichen Vorschaltelement $R_V$ oder $C_V$,

Fig. 3:     Darstellung der Abhängigkeit des Motorkippmoments $M_K$ des Synchronmotors von der Motorversorgungsspannung in Diagrammform,

Fig. 4:     Schaltungsanordnung zur Steuerung eines Synchronmotors mit einem spannungsveränderlichen Vorschaltelement,

Fig. 5:     Schaltungsanordnung zur Steuerung eines Synchronmotors mit einem als Bipolartransistor-Dioden-Kombination ausgebildeten Vorschaltelement,

Fig. 6:     Schaltungsanordnung zur Steuerung eines Synchronmotors mit einem als FET-Dioden-Kombination ausgebildeten Vorschaltelement,

Fig. 7 -10:  Darstellung der Spannung über dem Transistor $U_{CE}$ sowie des gesteuerten Phasenstroms durch eine Motorwicklung für verschiedene Netzspannungen in Form von Oszillogrammen.

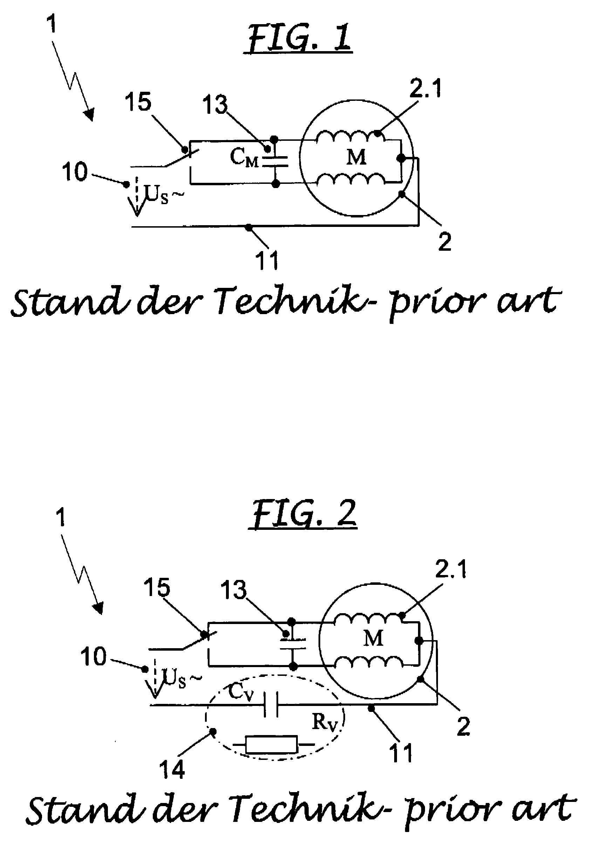

Die Fig. 1 zeigt eine aus dem Stand der Technik vorbekannte SchaltungsAnordnung 1 zur Steuerung eines Synchronmotors 2 mit einem BetriebsKondensator $C_M$ 13. Bei dem hier dargestellten 2-phasigen Synchronmotor 2 wird die zweite Phase durch einen Betriebskondensator $C_M$ 13 aus der Netzphase der Versorgungsspannung 10 gebildet. Weit verbreitet ist hierfür die Parallelschaltung, bei der eine gemeinsame Phase 11 gebildet wird. Die Motorspulen sind hierbei mit dem Bezugszeichen 2.1 und das Schaltelement zur Drehrichtungsumkehr des Synchronmotors 2 mit dem Bezugszeichen 15 gekennzeichnet.

In Fig. 2 ist eine aus dem Stand der Technik vorbekannte SchaltungsAnordnung 1 zur Steuerung eines Synchronmotors 2 mit einem spannungsunveränderlichen Vorschaltelement 14. Auch hierbei wird die zweite Phase durch einen Betriebskondensator $C_M$ 13 aus der Netzphase der Versorgungsspannung 10 gebildet. Um Synchronmotoren 2 an unterschiedlichen Versorgungsspannungen 10 betreiben zu können, kann als spannungsunveränderlichen Vorschaltelement 14 ein ohmscher $R_V$ oder kapazitiver $C_V$ Widerstand eingesetzt werden. Die gemeinsame Phase 11 des Synchronmotors, dessen Motorspulen 2.1 und das Schaltelement 15 zur Drehrichtungsumkehr des Synchronmotors 2 entsprechen denen der Fig. 1.

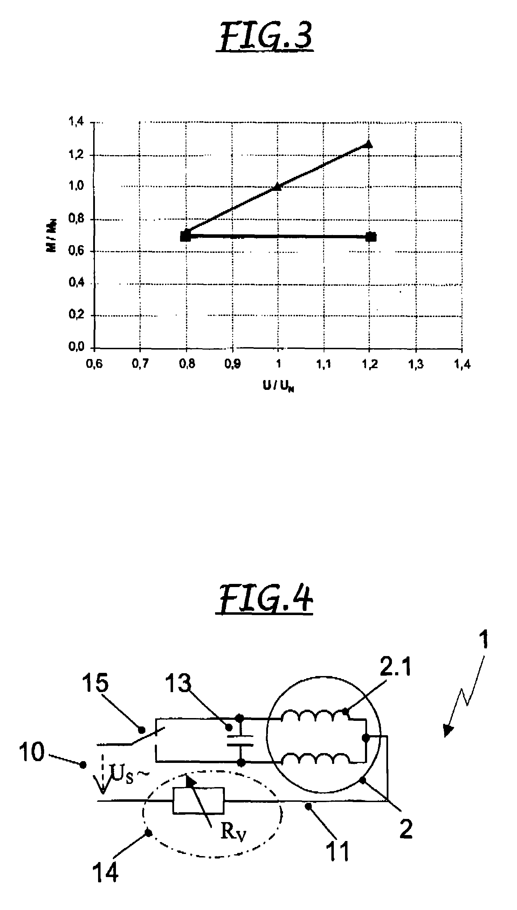

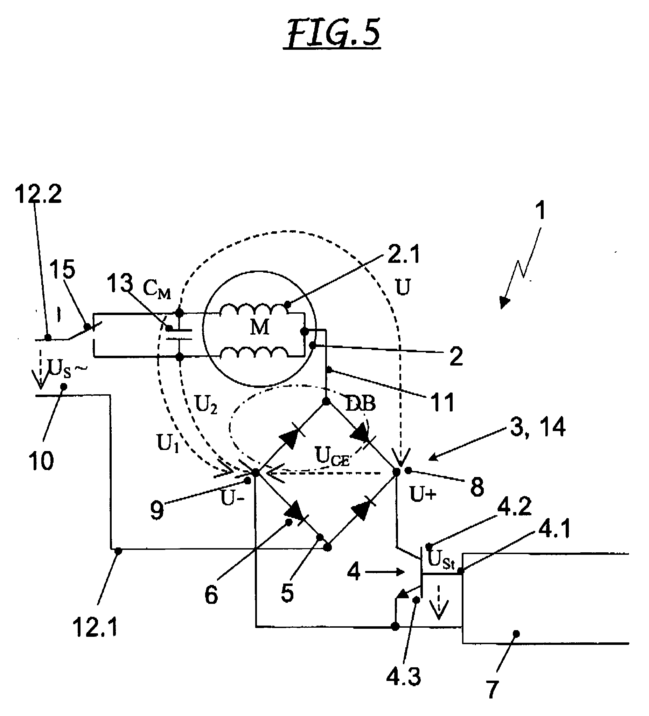

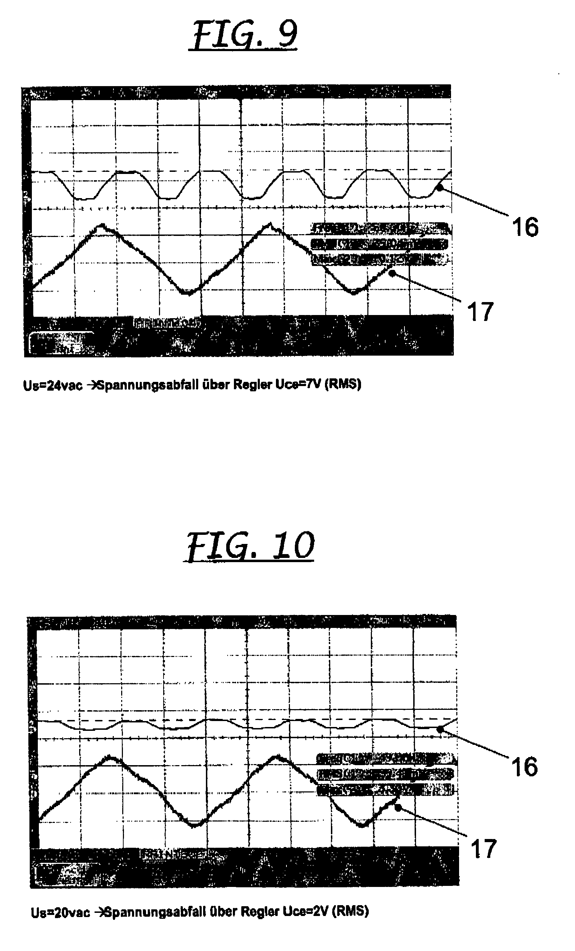

Die Fig. 3 illustriert die Abhängigkeit des Motorkippmoments $M_K$ des Synchronmotors 2 von der Motorversorgungsspannung in Diagrammform. Der geneigte Graph zeigt, wie das Motorkippmoment $M_K$ durch eine Veränderung der Motorversorgungsspannung gemäß dem Stand der Technik beeinflusst wird. Hingegen zeigt der horizontale Graph die erfindungemäße Lösung der Aufgabe, nämlich das Konstanthalten der Spannung über dem Synchronmotor 2 durch Verwendung eines in den Figuren 4 bis 10 beschriebenen spannungsveränderbaren Vorschaltelements 14.

Die Fig. 4 zeigt eine erfindungsgemäße Schaltungsanordnung 1 zur Steuerung eines Synchronmotors 2 mit einem spannungsveränderlichen Vorschaltelement 14. Der Grundaufbau der Schaltungsanordnung 1 mit Betriebskondensator $C_M$ 13, Motorspulen 2.1 des Synchronmotors 2, gemeinsame Phase 11 sowie Schaltelement 15 zur Drehrichtungsumkehr des Synchronmotors 2 entspricht dem der Fig. 2. Je nach Widerstandswert fällt ein unterschiedlich großer Anteil der Netzspannung über dem Vorschaltelement 14 ab. Das Vorschaltelement 14 kann so gesteuert werden, dass die Spannung über dem Synchronmotor 2 konstant bleibt. Im Ergebnis der konstanten Spannung fließt bei konstanter Motortemperatur auch ein konstanter Motorstrom.

Die Fig. 5 zeigt eine Schaltungsanordnung 1 gemäß Fig. 4 zur Steuerung eines Synchronmotors 2 mit einem als Transistor-Dioden-Kombination 3 ausgebildeten Vorschaltelement 14. Als steuerbares Vorschaltelement 14 wird vorzugsweise ein Bipolartransistor eingesetzt, der mittels einer als Gleichrichterbrücke 5 ausgebildeten Diodenschaltung vor einer alternierenden Wechselspannung geschützt wird. Zwischen den Schaltungspunkten U- 9 und U+ 8 der Gleichrichterbrücke 5 ist der Bipolartransistor platziert. Hierbei wird der Schaltungspunkt U+ 8 mit dem Kollektor 4.2 des Bipolartransistors und der Schaltungspunkt U- 9 mit dem Emitter 4.3 des Bipolartransistors verbunden. Durch diese Transistor-Dioden-Kombination 3 wird sichergestellt, dass die Spannung über dem elektronischen Schalter bzw. über dem Bipolartransistor immer die gleiche Polarität hat. Der Bipolartransistor kann an seiner Basis 4.1 über die Steuerspannung $U_{St}$ analog gesteuert werden. Die Steuerspannung $U_{St}$ benötigt Bezug zum Potential U- und hat dadurch auch Bezug zur Versorgungsspannung $U_S$ 10. Durch den Potentialbezug ist eine berührungssichere Ausführung der Schaltungsanordnung 1 unabdingbar. Zum Zwecke der Genierung der Steuerspannung $U_{St}$ des Bipolartransistors wird eine mit dem Laststrom des Bipolartransistors beaufschlagbare interne Auswerte- und Steuereinheit 7 eingesetzt. Der Spannungspunkt U- 9 der Gleichrichterbrücke 5 ist sowohl mit dem Emitter 4.3 des Bipolartransistor sowie mit der Auswerte- und Steuereinheit 7 Signal leitend gekoppelt. Über die Gleichrichterbrücke 5 ist die interne Auswerte- und Steuereinheit 7 zum Zwecke der Spannungsmessung und -überwachung mit den Motorspulen 2.1 und dem Bipolartransistor gekoppelt. Besonders vorteilhaft kann neben der Spannungsmessung und -überwachung auch eine Phasenwinkelmessung an den Motorspulen 2.1 zur elektronischen Endlagenerkennung des Synchronmotors 2 eingesetzt werden.

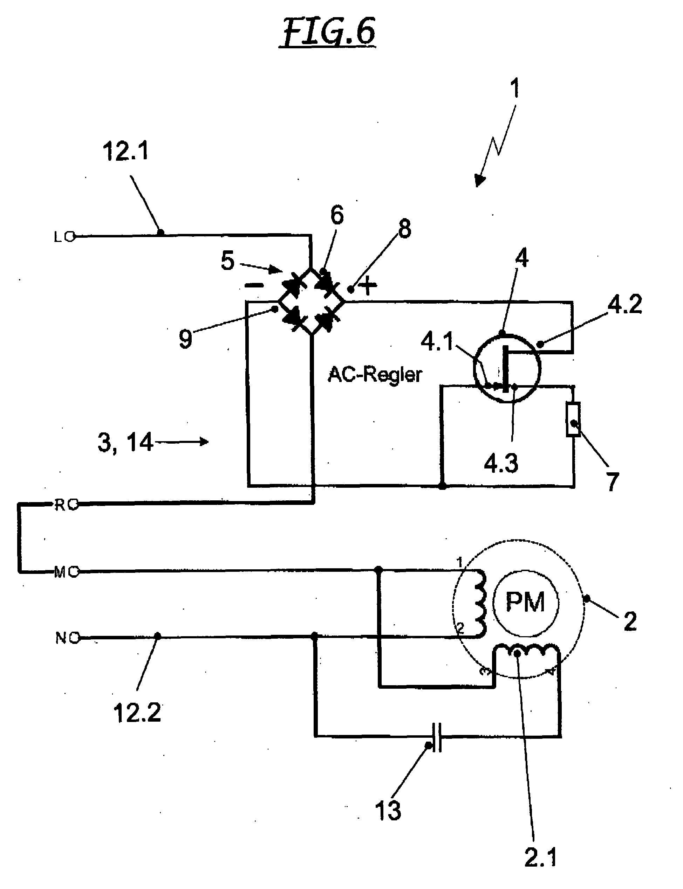

Die Fig. 6 zeigt eine Schaltungsanordnung 1 gemäß Fig. 4 zur Steuerung eines Synchronmotors 2 mit einem als FET-Dioden-Kombination 3 ausgebildeten Vorschaltelement 14. Als steuerbares Vorschaltelement 14 wird hierbei ein FET eingesetzt, der mittels einer als Gleichrichterbrücke 5 ausgebildeten Diodenschaltung vor einer alternierenden Wechselspannung geschützt wird. Zwischen den Schaltungspunkten U- 9 und U+ 8 der Gleichrichterbrücke 5 ist der FET platziert. Als interne Auswerte- und Steuereinheit 7 wird hierbei ein Stromfühlerwiderstand verwendet, der zwischen der Source 4.3 des FET und dem Spannungspunkt U- 9 der Gleichrichterbrücke 5 platziert ist. Des Weiteren sind der Spannungspunkt U+ 8 der Gleichrichterbrücke 5 mit dem Drain 4.2 des FET und das Gate 4.1 des FET mit dem Spannungspunkt U- 9 der Gleichrichterbrücke 5 und damit auch mit der Source 4.3 des FET gekoppelt. Die Schaltungsanordnung nach Fig. 6 als Kombination eines selbstleitenden Sperrschicht-FET (depletion-mode junction field-effect transistor) mit Stromfühlerwiderstandes in einer Diodenbrücke stellt die einfachste vorstellbare Ausprägung des erfindungsgemäßen Vorschaltelementes dar. Je nach Anforderung an die Qualität der Regelung des Kippmomentes $M_K$ sind weitere Bauelemente zur Einstellung und Temperaturkompensation des Arbeitspunktes ausführbar. Besonders vorteilhaft kann auch bei dieser Ausgestaltung der Erfindung neben der Spannungsmessung und -überwachung auch eine Phasenwinkelmessung an den Motorspulen 2.1 zur elektronischen Endlagenerkennung des Synchronmotors 2 eingesetzt werden.

Mit den Bezugszeichen 12.1 und 12.2 ist der erste bzw. der zweite Netzleiter gekennzeichnet.

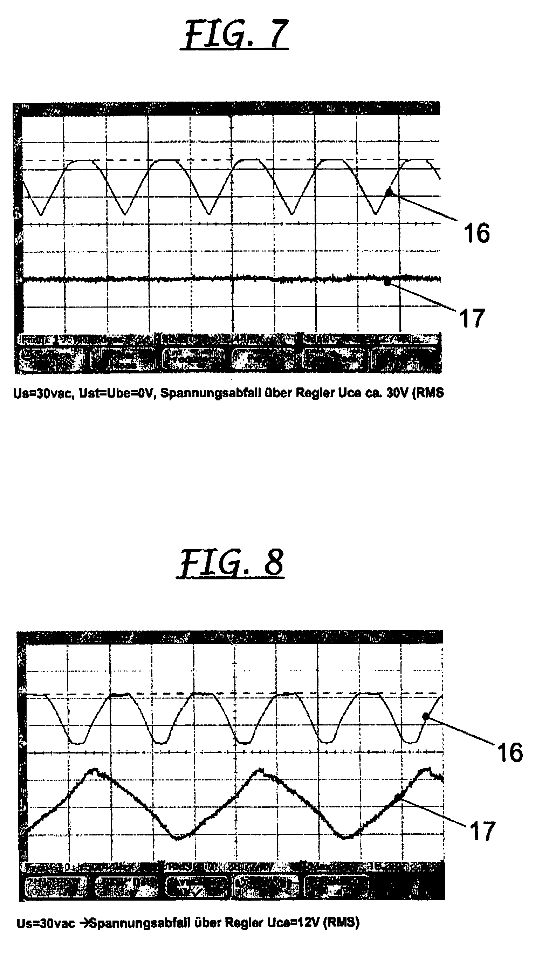

Die in den Figuren 7 bis 10 abgebildeten Oszillogramme repräsentieren in der Zusammenschau mit der Fig. 5 das realisierte Steuerverhalten am Beispiel eines Saia-Burgess-Synchronmotor UCR1 2 mit einer Nennspannung von $24V_{AC}$.

Für unterschiedliche Netzspannungen $U_S$ bzw. Steuerspannungen $U_{St}$ werden jeweils die Spannung über dem Transistor $U_{CE}$ (oberer Graph) 16 und der gesteuerte Phasenstrom durch eine Motorspule 2.1 (unterer Graph) 17 dargestellt. Bei einer Steuerspannung $U_{St}=0V$ ist der Bipolartransistor 4 als Schalter vollständig gesperrt und der Synchronmotor 2 komplett abgeschaltet. Mit Hilfe der Steuerspannung $U_{St}$ wird der Regler der Auswerte- und Steuereinheit 7 im aktiven Bereich betrieben und ein Sollwert des Phasenstromes 17 von etwa 39mA eingestellt. Somit wird auch das Motorkippmoment, respektive das Überlastmoment, stabilisiert.

Misst man die beiden Spitzenwerte der Wechselspannungen $U_1$ und $U_2$ sowie die Spitzenspannung von U+ mit Potentialbezug zu U-, kann die Spannung U über den Motorspulen 2.1 berechnet werden. Ausgehend vom Zusammenhang $M_K=f(U)$ kann somit die Auswerte- und Steuereinheit 7 mit Bezug zum Potential U- eingesetzt werden, um den Spitzenwert der Spannung über den Motorspulen 2.1 nahezu konstant zu halten und damit ein von der Netzspannung unabhängiges Kippmoment $M_K$ zu gewährleisten. Für den Fall $U_1>U_2$ gilt:

$$\hat{U} \approx \hat{U}_1 - \hat{U}_{CE}$$

und für die andere Stellung des Schaltelements 15 mit umgekehrter Drehrichtung des Synchronmotors 2 gilt:

$$\hat{U} \approx \hat{U}_2 - \hat{U}_{CE}$$

Um zusätzlich zum Regeln des maximalen Motormoments den Synchronmotor 2 in Aktuatorapplikationen ohne zusätzliche Schaltelemente wie z. B.

Endlagenschalter abzuschalten, ist eine Anschlagerkennung notwendig, die die Steuerung des Bipolartransistors 4 mittelbar beeinflusst. Die vorgestellte Schaltungsvariante mit Transistor-Dioden-Kombination 3 ermöglicht diese Option auf nachstehende Weise: Erreicht der Synchronmotor 2 beispielsweise eine seiner Endlagen, so ändert sich der Spannungsabfall der über den Betriebskondensator 13 mit Strom versorgten Motorspule 2.1 signifikant. Mit einer Spannungsmessung kann also das Überschreiten des gesteuerten Kippmomentes $M_K$ überwacht und der Synchronmotor 2 an den Endanschlägen bzw. bei Überlast abgeschaltet werden. Die erfindungemäße Schaltungsanordnung 1 kann somit selbständig den Stellbereich des Synchronmotors 2 erkennen. Eine alternative Möglichkeit zur Detektierung des Synchronisationsverlustes ist die Analyse der Phasenverschiebung zwischen den beiden gemessenen Spannungen $U_1$ und $U_2$. Diese Phasenverschiebung beträgt im normalen Betrieb etwa 90 Grad und ändert sich signifikant beim Anschlagen des Synchronmotors 2.

**LISTE DER BEZUGSZEICHEN**

| | |
|---|---|
| 1 | Schaltungsanordnung |
| 2 | Synchronmotor |
| 2.1 | Motorspulen |
| 3 | Transistor-Dioden-Kombination |
| 4 | Transistor |
| 4.1 | Basis/Gate des Transistors |
| 4.2 | Kollektor/Drain des Transistors |
| 4.3 | Emitter/Source des Transistors |
| 5 | Gleichrichterbrücke |
| 6 | Diode |
| 7 | Auswerte- und Steuereinheit |
| 8 | Schaltungspunkt U+ |
| 9 | Schaltungspunkt U- |
| 10 | Versorgungsspannung |
| 11 | gemeinsame Phase |
| 12.1 | erster Netzleiter |
| 12.2 | zweiter Netzleiter |
| 13 | Betriebskondensator |
| 14 | Vorschaltelement |
| 15 | Schaltelement |
| 16 | Spannung über dem Transistor $U_{CE}$ |
| 17 | Phasenstrom durch Motorwicklung |

**Patentansprüche**

1. Schaltungsanordnung (1) zur Einstellung von Motorkennlinien, insbesondere zur Stabilisierung des Motorkippmoments eines 2-phasigen Synchronmotors (2) unter Verwendung eines Vorschaltelements (14), wobei das Vorschaltelement (14) zwischen einem als Neutralleiter ausgebildeten ersten Netzleiter (12.1) und der gemeinsamen Phase (11) des Synchronmotors (2) geschaltet ist und ein als Leiter ausgebildeter zweiter Netzleiter (12.2) mit einer Phase des Synchronmotors (2) verbunden ist, **dadurch gekennzeichnet, dass** als spannungsveränderbares Vorschaltelement (14) eine Transistor-Dioden-Kombination (3) eingesetzt wird, wobei zur Erzielung einer annähernd konstanten sinusförmigen Wechselspannungsamplitude und/oder Wechselstromamplitude durch den Synchronmotor (2) der für die maximale Spitzenspannung der pulsierenden Netzspannung ausgelegte und in seinem Arbeitspunkt analog steuerbar ausgebildete Transistor (4) ein nicht getakteter Bipolartransistor oder Feldeffekttransistor (FET) ist, und die Dioden (6) als Gleichrichterbrücke (5) formiert sind.

2. Schaltungsanordnung (1) nach Anspruch 1, **dadurch gekennzeichnet, dass** zur Generierung der analogen internen Steuerspannung $U_{St}$ des Bipolartransistors eine interne Auswerte- und Steuereinheit (7) vorgesehen ist, wobei

   a. die Auswerte- und Steuereinheit (7) mit der Basis (4.1) des Bipolartransistors,
   b. der Spannungspunkt U+ (8) der Gleichrichterbrücke (5) mit dem Kollektor (4.2) des Bipolartransistors,
   c. der Spannungspunkt U- (9) der Gleichrichterbrücke (5) mit dem Emitter (4.3) des Bipolartransistors sowie der Auswerte- und Steuereinheit (7)

   gekoppelt sind.

3. Schaltungsanordnung (1) nach Anspruch 2, **dadurch gekennzeichnet, dass** zur Generierung der internen Steuerspannung $U_{st}$ des Bipolartransistors die interne Auswerte- und Steuereinheit (7) mit dem Laststrom des Transistors (4) oder mit dem Spannungsabfall über dem Synchronmotor beaufschlagbar ausgebildet ist.

4. Schaltungsanordnung (1) nach Anspruch 1, **dadurch gekennzeichnet, dass** zur Generierung der internen Steuerspannung $U_{st}$ des Feldeffekttransistors (FET) eine interne Auswerte- und Steuereinheit (7) vorgesehen ist, wobei

   a. der Spannungspunkt U+ (8) der Gleichrichterbrücke (5) mit dem Drain (4.2) des FET,
   b. die Auswerte- und Steuereinheit (7) mit der Source (4.3) des FET und dem Spannungspunkt U- (9) der Gleichrichterbrücke (5) und
   c. das Gate (4.1) des FET mit dem Spannungspunkt U- (9) der Gleichrichterbrücke (5)

   gekoppelt sind.

5. Schaltungsanordnung (1) nach Anspruch 4, **dadurch gekennzeichnet, dass** zur Generierung der internen Steuerspannung $U_{St}$ des FET die interne Auswerte- und Steuereinheit (7) mit dem Laststrom des FET beaufschlagbar ausgebildet ist.

**6.** Schaltungsanordnung (1) nach Anspruch 4 oder 5, **dadurch gekennzeichnet, dass** als FET ein selbstleitender SFET eingesetzt wird, der durch den Spannungsabfall an einem Stromfühlerwiderstand zwischen der Source (4.3) und dem Spannungspunkt U- (9) gesteuert wird.

**7.** Schaltungsanordnung (1) nach einem der Ansprüche 2 bis 6, **dadurch gekennzeichnet, dass** die Auswerte- und Steuereinheit (7) zum Zwecke der Spannungsmessung und -überwachung mit den Motorspulen (2.1) und dem Transistor (4) gekoppelt ist.

**8.** Schaltungsanordnung (1) nach Anspruch 7, **dadurch gekennzeichnet, dass** die Spannungsmessung und -überwachung und/oder eine Phasenwinkelmessung an den Motorspulen (2.1) zur elektronischen Endlagenerkennung des Synchronmotors (2) eingesetzt wird.

**9.** Schaltungsanordnung (1) nach einem der Ansprüche 2 bis 8, **dadurch gekennzeichnet, dass** eine von der Auswerteeinheit potentialgetrennte und als Mikrokontroller ausgebildete externe Steuereinheit zur Generierung der Steuerspannung des Transistors (4) vorgesehen ist.

**10.** Schaltungsanordnung (1) nach einem der Ansprüche 1 bis 9, **dadurch gekennzeichnet, dass** zur Abschaltung des Synchronmotors (2) beim Erreichen seiner Endlagen der Transistor (4) komplett gesperrt wird und dabei die gemeinsamen Phase (11) des Synchronmotors (2) unterbricht.

## FIG. 1

*Stand der Technik- prior art*

## FIG. 2

*Stand der Technik- prior art*

## FIG.3

## FIG.4

# FIG.5

# *FIG.6*

## FIG. 7

16

17

Us=30vac, Ust=Ube=0V, Spannungsabfall über Regler Uce ca. 30V (RMS

## FIG. 8

16

17

Us=30vac →Spannungsabfall über Regler Uce=12V (RMS)

## FIG. 9

— 16

— 17

Us=24vac →Spannungsabfall über Regler Uce=7V (RMS)

## FIG. 10

— 16

— 17

Us=20vac →Spannungsabfall über Regler Uce=2V (RMS)

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,Y | DE 35 09 451 A1 (MUELLER HANS DIPL BETRIEBSW FH [DE]) 25. September 1986 (1986-09-25) * Seite 7 - Seite 46 * * Abbildungen 1,2 * | 1-10 | INV. H02P6/00 H02P6/24 |
| Y | ----- | 1-10 | |
| Y | DE 100 36 381 A1 (JAEKL HANS JOERG [DE]) 7. Februar 2002 (2002-02-07) * Absätze [0001], [0031] * ----- | 1-10 | |
| Y | DE 41 42 569 A1 (BOSCH GMBH ROBERT [DE]) 24. Juni 1993 (1993-06-24) * Spalte 2, Zeile 29 - Spalte 2, Zeile 39 * ----- | 1-10 | |
| A | WO 02/095926 A (SAIA BURGESS GMBH [DE]; KNAEBEL HEIKO [DE]) 28. November 2002 (2002-11-28) * Zusammenfassung * * Abbildungen 1,2 * ----- | 1-10 | |

**RECHERCHIERTE SACHGEBIETE (IPC)**

H02P

Der vorliegende Recherchenbericht wurde für alle Patentansprüche erstellt

| Recherchenort | Abschlußdatum der Recherche | Prüfer |
|---|---|---|
| München | 30. August 2007 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 00 6910

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-08-2007

| Im Recherchenbericht angeführtes Patentdokument | Datum der Veröffentlichung | Mitglied(er) der Patentfamilie | Datum der Veröffentlichung |
|---|---|---|---|
| DE 3509451 A1 | 25-09-1986 | KEINE | |
| DE 10036381 A1 | 07-02-2002 | KEINE | |
| DE 4142569 A1 | 24-06-1993 | JP 6196987 A | 15-07-1994 |
| WO 02095926 A | 28-11-2002 | DE 10124877 A1 | 28-11-2002 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 02095926 A1
- DE 20008483 U1
- DE 19533076 A1
- DE 3509451 A1